# EUROPÄISCHE PATENTANMELDUNG

(11) **EP 0 657 770 A2**
(43) Veröffentlichungstag der Anmeldung: **14.06.1995**
(21) Anmeldenummer: 94100648.8
(22) Anmeldetag: 18.01.1994
(51) Int. Cl.: G03B 27/73

(54) **Dosierendes Belichtungssystem für die Farbfotografie zur Herstellung von Vergrösserungen**

(71) Anmelder: Böhme, Thomas, D-81539 München (DE); Strobel, Johann, D-81667 München (DE)
(72) Erfinder: Böhme, Thomas, D-81539 München (DE); Strobel, Johann, D-81667 München (DE)

(57) **Zusammenfassung**

Der vorliegenden Erfindung liegt die Aufgabe zugrunde, die beschriebenen Nachteile der üblichen Verfahren zur Herstellung von Farbvergrößerungen zu vermeiden.
Das dosierende Farbbelichtungssystem, umgeht die jeweiligen Nachteile beider Verfahren, da einstellbare oder auswechselbare Filter und unterschiedliche Belichtungszeiten für die einzelnen Farben umgangen werden. Die Lichtquellen für die einzelnen Farben sind voneinander getrennt angeordnet und können sich gegenseitg nicht beeinflussen.

Um die für die Belichtung eies Abzugs benötigte Farbmischung einzustellen, wird der Strahlengang der einzelnen Farben durch eine von drei Blenden oder durch andere geeignete Maßnahmen abgedeckt.
Damit ändert sich der Querschnitt des Strahls, das Licht wird dosiert. Im Einzelnen bringt das der Erfindung zugrundliegende Verfahren folgende Vorteile gegenüber den herkömmlichen Verfahren:
· keine gegenseitige Beeinflussung von einzelnen Farbfiltern, dadurch Verkürzung der Gesamtbelichtungszeit und höherer Durchsatz bei industriellen Fotoprintern.
· gleiche Belichtungszeit für die drei Farben und damit Umgehung einer Farbverzerrung durch den Langzeiteffekt oder Ultrakurzeffekt. (Reziprozitätsgesetz)
· Exakte und einfache Farbführung unabhängig von veränderlichen Belichtungszeiten und Belichtungsabständen
· Durch vergleichendes Meßverfahren Unabhängigkeit von unterschiedlichen Fotopapieren, Chemikalien und Negativen.

## Beschreibung

Die vorliegende Erfindung betrifft ein dosierendes Belichtungssystem für die drei Lichtfarben eines Vergrösserungsgerätes zur Herstellung von Farbbildern von Negativ- und Diapositivfilm.

### Stand der Technik

Zur Vergrösserung von Farbfotos werden zur Zeit zwei verschiedene Belichtungssysteme eingesetzt, die auf der Basis von additiver oder subtraktiver Farbmischung arbeiten. Beide Verfahren sind mit bestimmten Nachteilen verbunden, die nachfolgend erläutert sind.

Das additive Belichtungssystem ist charakterisiert durch folgende Faktoren: drei unterschiedliche Belichtungszeiten für die einzelnen Farben, Gesamtbelichtungszeit, Dichte und veränderlichem Belichtungsabstand. Diese untereinander verknüpften Faktoren lassen sich mit den üblichen Methoden nicht exakt analysieren.
Bei den verbreiteten Fotoprintern wird meist das additive Belichtungssystem verwendet, das wegen der unterschiedlichen Belichtungszeiten für die drei Grundfarben am Ultrakurzeffekt krankt. Verschiedene Sensibilisierungen bei Fotopapieren erfordern unterschiedliche Belichtungszeiten. Darüberhinaus weisen die verschiedenen farbempfindlichen Schichten des Fotopapiers unterschiedliche Schwarzschildfaktoren auf. Daher treten bei extrem kurzer oder langer Belichtungszeit einer Farbe Farbverzerrungen auf.

Die vorliegende Erfindung des dosierenden Belichtungssystems vermeidet diesen Nachteil, da die Belichtungszeit für die drei Grundfarben gleich ist. Die unterschiedliche Farbverteilung wird durch Abdecken eines Teils des Strahlenganges erreicht.

Das subtraktive Belichtungssystem ist durch die gegenseitige Beeinflussung der drei verschiedenen Filter charakterisiert. Jeder Filter für eine bestimmte Farbe absorbiert auch einen Teil der jeweils anderen Farben. Das Ausfiltern ist deher sehr langwierig, da diese Beeinflussung mit Hilfe der Blende oder der Belichtungszeit kompensiert werden muß.

Das dosierende Belichtungssystem vermeidet diesen Nachteil, da jede Farbe unabhängig von den anderen dosiert wird. Die unterschiedliche Farbverteilung wird durch Abdecken eines Teils des Strahlenganges jeder Farbe erreicht.

### Aufgabe der Erfindung

Der vorliegenden Erfindung liegt die Aufgabe zugrunde, die beschriebenen Nachteile der üblichen Verfahren zur Herstellung von Farbvergrößerungen zu vermeiden.
Das dosierende Farbbelichtungssystem, umgeht die jeweiligen Nachteile beider Verfahren, da einstellbare oder auswechselbare Filter und unterschiedliche Belichtungszeiten für die einzelnen Farben umgangen werden. Die Lichtquellen für die einzelnen Farben sind voneinander getrennt angeordnet und können sich gegenseitg nicht beeinflussen.
Um die für die Belichtung eies Abzugs benötigte Farbmischung einzustellen, wird der Strahlengang der einzelnen Farben durch eine von drei Blenden oder durch andere geeignete Maßnahmen abgedeckt.
Damit ändert sich der Querschnitt des Strahls, das Licht wird dosiert.
Im Einzelnen bringt das der Erfindung zugrundliegende Verfahren folgende Vorteile gegenüber den herkömmlichen Verfahren:

### Gegenüber subtraktiv arbeitenden Belichtungssystemen:

· keine gegenseitige Beeinflussung von einzelnen Farbfiltern, dadurch Verkürzung der Gesamtbelichtungszeit und höherer Durchsatz bei industriellen Fotoprintern.

### Gegenüber additiv arbeitenden Belichtungssystemen:

· gleiche Belichtungszeit für die drei Farben und damit Umgehung einer Farbverzerrung durch den Langzeiteffekt oder Ultrakurzeffekt. (Reziprozitätsgesetz)

### Gegenüber subtraktiv und additiv arbeitenden Belichtungssystemen:

· Exakte und einfache Farbführung unabhängig von veränderlichen Belichtungszeiten und Belichtungsabständen
· Durch vergleichendes Meßverfahren Unabhängigkeit von unterschiedlichen Fotopapieren, Chemikalien und Negativen.

Die Dosierung der Farbe hat eine additve Komponente, aber mit nur einer Belichtungszeit für die drei Grundfarben anstatt drei verschiedenen sowie eine subtraktive Komponente, aber nicht mit drei Filtern, sondern drei verschiedenen Abdeckblenden.

Bei der Messung einer der Grundfarben werden die beiden anderen abgeschaltet. Die drei Grundfarben Blau, Grün und Rot werden voneinander völlig unabhängig angesteuert und stören sich gegenseitig bei der Farbmessung nicht.

So kann der Farbton sowohl bei verschiedenen Belichtungszeiten als auch bei verändertem Belichtungsabstand exakt festgehalten werden. Daher kann problemlos sowohl Intergral- als auch Spotmessung angewendet werden.

Von weitreichender Bedeutung ist die einfache Bedienug der Farbdosierung, wie sie im Ausführungsbeispiel beschrieben ist, für den Amateurbereich, da die sonst üblichen, komplizierten Belichtungsysteme nur schwer durchschaubar sind. Anstelle der üblichen Analyse der Farben tritt ein vergleichendes Meßverfahren. Die Arbeit mit dem dosierenden Farbbelichtungssystem ist klar und einfach, sodaß auch der Amateur die gegenseitigen Abhängigkeiten unter den Farben sofort begreift.
Rein subtraktive oder additive Belichtungssysteme können selbst mit aufwendiger Elektronik nicht so flexibel und leicht bedienbar sein wie das der Erfindung zugrundeliegende Farbdosiersystem.
Im industriellen Bereich werden durch die exakte Farbführung des dosierenden Belichtungssystems unnötige Probeabzüge vermieden.

### Ausführungsbeispiel

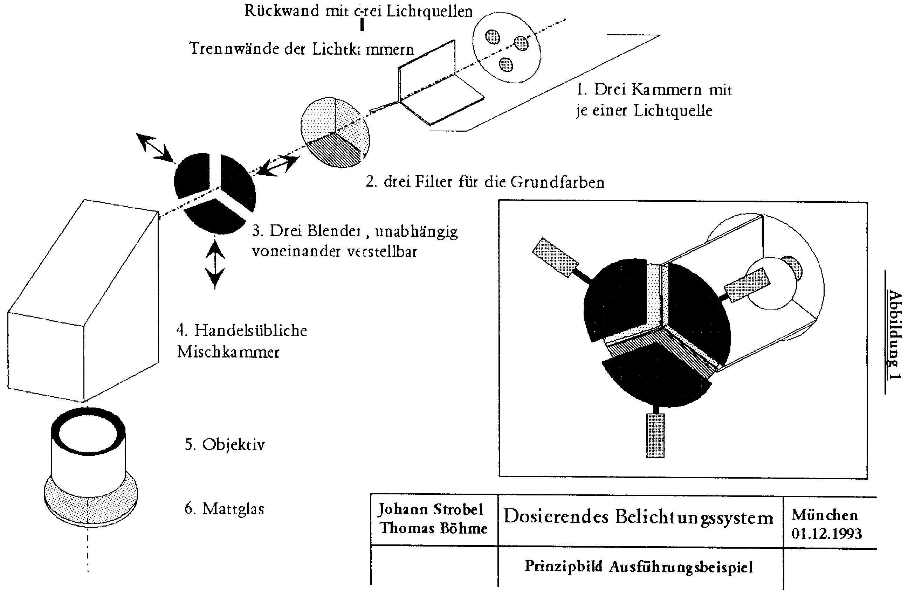

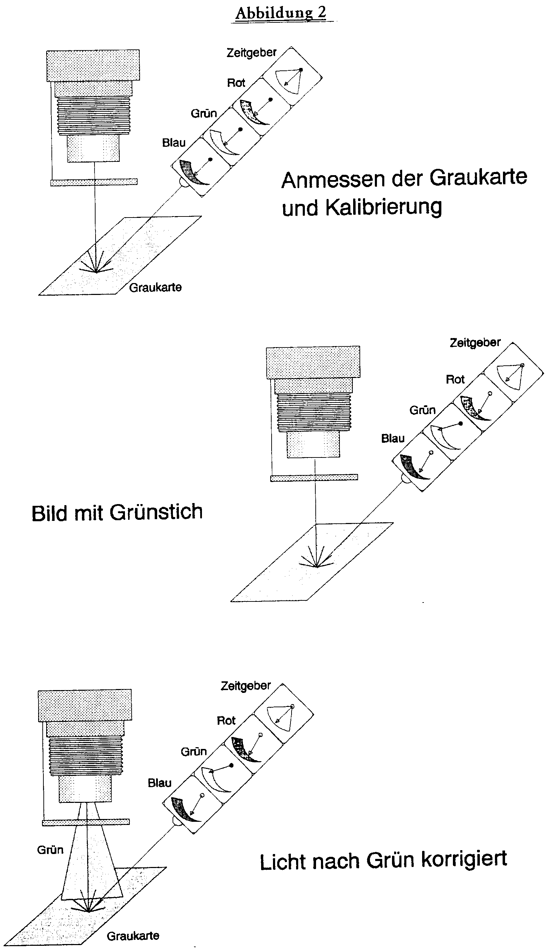

Die Erfindung wird nachstehend anhand eines Ausführungsbeispiels und zugehöriger Zeichnungen erläutert
In der Zeichnung Bedeuten:
1. Drei getrennte Kammern mit jeweils einer Lichtquelle
2. drei unveränderliche Filter für die einzelnen Grundfarben
3. mechanisch oder elektrisch verstellbare Blenden zur Steuerung oder Regelung der auf die Emulsion fallenden Lichtmenge
4. Handelübliche Mischkammer zur Mischung der drei Farben
5. Schaltsystem zur Ansteuerung der unabhängigen Lichtquellen für blau, rot und grün
6. Handelsübliches Objektiv
7. Mattglas zur Erzeugung von zerstreutem Licht zur Herstellung der Referenzabzüge

### Im folgenden ist die Arbeit mit dem Dosicolor - System anhand der Skizzen beschrieben.

Der verwendete Coloranalyser ist sehr einfach aufgebaut. Er besteht aus einer Meßzelle ohne Filter mit einer Anzeige für die drei Grundfarben und einer Schaltuhr, die die Empfindlichkeit der drei Kanäle beeinflußt.

Das Anmessen der Bilder, Graukarten oder Referenzabzüge erfolgt wie nachstehend beschrieben.
Nacheinander wird nur eine der drei Lichtquellen aktiviert. Das auf die Projektionsfläche auftreffende farbige Licht wird reflektiert und von der Meßzelle der Analysers aufgenommen.

Der der jeweiligen Farbe zugehörige Anzeigewert wird notiert oder durch geeignete Vorrichtungen gespeichert.
Die Einstellung der eingebauten Zeitschaltuhr beeinflusst die Anzeigeempfindlichkeit der Anzeige, sodaß die Verstellung der Belichtungszeit die Anzeige einer höheren oder niedrigeren Helligkeit zur Folge hat.
1. Bei Verwendung eines anderen Negativs, anderer Chemikalien oder eines anderen Photopapiers werden zunächst von einem Negativ ein Probebild hergestellt.
   Mit Hilfe von durch ein Mattglas zerstreutem Licht wird außerdem ein Referenzabzug angefertigt.
   Im gezeigten Beispiel hat das entstandene Bild einen Grünstich.
2. Dann wird die Graukarte mit dem Coloranalyser angemessen. Die Anzeigen des Analysers werden auf Null gestellt.
3. Der grüne Abzug wird mit dem Coloranalyser angemessen, die Abweichungen der einzelnen Farbkanäle von der Graukarte werden mit geeigneten Mitteln gespeichert oder notiert.
4. Jetzt wird wieder die Graukarte angemessen. Die einzelnen Farbregler am Farbdosierkopf werden so verstellt, daß die Anzeige der jeweiligen Kanäle des Coloranalysers die vorher erfassten Werte des Grünstichs anzeigen. Die mit dieser Einstellung hergestellte Vergrößerung hat exakt den Farbton der Graukarte

### Fotos mit gewollter Farbtönung

Von einem Negativ liegt eine Vergrößerung vor, die experimentell mit den üblichen Verfahren in der gewünschten Farbtönung angefertigt wurde, zum Beispiel mit einem Rotstich. Mit Hilfe von durch ein Mattglas zerstreutem Licht wurde von diesem Bild bereits ein Referenzabzug hergestellt.
5.Dieses rotstichige Referenzabzug wird wird mit dem Coloranalyser angemessen. (nach der Graukarte)
   Die Abweichungen der einzelnen Farbkanäle von den vorher erfassten Werten des Grünstichs werden mit den Farbreglern am Farbdosierkopf so verstellt, daß die Anzeigen der einzelnen Kanäle des Coloranalysers wieder die vorher erfassten Werte des Grünstichs anzeigen.

Die mit dieser Einstellung hergestellte Vergrößerung hat exakt den Farbton des rotstichigen Referenzabzuges.

## Patentansprüche

1. Dosierendes Belichtungssystem zur Erzeugung des gewünschten Projektionlichtes aus den drei Grundfarben zur Herstellung eines Farbbildes von einem Negativ oder Diapositiv.
Gekennzeichnet durch:
1. getrennte und unabhängig voneinander anzusteuernde Lichtquellen für jede der drei Grundfarben
2. Mechanisch oder elektrisch unabhängig voneinander angetriebene Blenden im Strahlengang der jeweiligen Farbe
3. gleiche gemeinsame Belichtungszeit für jede der drei Farben
